# EUROPEAN PATENT SPECIFICATION

(11) **EP 4 212 693 B1**
(45) Date of publication and mention of the grant of the patent: **03.07.2024**
(21) Application number: 22210735.1
(22) Date of filing: 01.12.2022
(51) Int. Cl.: E05F 15/74, E05F 15/76, E05F 15/78, G01J 5/00, G01J 5/02

(54) **OBJECT DETECTION SENSOR AND AUTOMATIC DOOR SYSTEM**
OBJEKTERKENNUNGSSENSOR UND AUTOMATISCHES TÜRSYSTEM
CAPTEUR DE DÉTECTION D'OBJET ET SYSTÈME DE PORTE AUTOMATIQUE

(30) Priority: 23.12.2021 JP 2021209449
(43) Date of publication of application: 19.07.2023
(73) Proprietor: Optex Co., Ltd., Otsu-shi, Shiga 520-0101 (JP)
(72) Inventor: TANABE, Hiroaki, Otsu-shi, Shiga 520-0101 (JP); TAKAHASHI, Hironobu, Otsu-shi, Shiga 520-0101 (JP); YOSHIKAI, Shuji, Otsu-shi, Shiga 520-0101 (JP)
(74) Representative: Herrero & Asociados, S.L.

(56) References cited:
- GB-A- 2 526 071
- US-A1- 2021 222 479

## Description

### BACKGROUND OF THE INVENTION

### (Field of the Invention)

The present invention relates to an object detection sensor configured to detect to-be-detected rays or detection rays from a target object to output a predetermined detection signal and an automatic door system including the object detection sensor.

### (Description of Related Art)

Conventionally, object detection sensors such as PIR sensors [passive infrared ray sensors] have been used to detect to-be-detected rays such as infrared rays from a target object to output predetermined detection signals. Further, object detection devices have been used, in conjunction with the object detection sensors, to detect the target object in response to input of the predetermined detection signals from the object detection sensors. The target object includes, for example, physical bodies such as heat generating bodies including humans and animals. AIR sensors [active infrared ray sensors] are mainly used as safety sensors and/or area sensors, which are also encompassed within the object detection sensors. Object detection devices including AIR sensors have also been used. As an applied technology of such object detection devices, automatic door systems which include, for example, an object detection sensor as described above, an automatic door including door leaves which open and close automatically and a door engine which causes the door leaves to open and close; an automatic door control device which is the object detection device and controls the door engine on the basis of a result of detection of a human body which is the target object have been used at the entrances of facilities or the like. In respect of a safety control system, monitoring (i.e., transmission of test signals from test equipment (TE: Test Equipment) and response to the test equipment from a sensor or the like which is input equipment) is performed between the control device, the input-side sensor, the output-side door engine, etc., and test equipment which may be incorporated in the control device. As for the safety control system, for example, the safety standard ISO13849-1 which defines the test equipment, the input equipment and the test signals is known. The standard requires the automatic door system to be of category 2 or above.

A conventionally known automatic door system includes, for example, a control device which additionally serves as a dead man's controller, an automatic door (door leaves, etc.) and a sensor, in which the control device causes the door leaves of the automatic door to close in response to a manual key, and execute saving of sensor information, parameter learning and calibration of the sensor (for example, DE102011102963A). This system solves the problems related to accident prevention during installation, and suspension and resumption of installation, in terms of safety and ease of installation.

Another conventionally known automatic door system includes, for example, a control device, a swing door, and an automatic door sensor including a rotation detector, in which the automatic door sensor detects the rotation of the swing door during door opening to record the opening and closing state of the door and/or the installation position of the door sensor inside or outside (for example, USP10975608). This system partly automates setting of the sensor information in dependence of the installed door in terms of ease of installation.

US 2021/222479 A1 also discloses an example of an object detection sensor.

### SUMMARY OF THE INVENTION

As described above, in an automatic door system, test signals are transmitted from test equipment of a safety control system, and response signals are transmitted (returned) from input equipment to the test equipment. In this regard, response to the test signals is made in a specified manner from the sensor or the like to secure the safety of the function of the automatic door system. Conventionally, electrical characteristics of test signals and the like vary depending on the manufacturer of the automatic door, and in order to accommodate the variation, setting of the automatic door (control device) or of the sensor must be made to match the characteristics of the test signals and the response signals between the transmitting and receiving sides. That is, a constructor must perform the setting of the signals (matching of the signal characteristics), considering the characteristics when installing an automatic door. A constructor, however, in many cases installs an automatic door without knowing a so-called handshake or the like between test signals and response signals in safety control, so that the setting relating to safety control as described above has been one of the factors that make the installation cumbersome.

However, the above-described conventional automatic door systems disclose saving of the sensor information, calibration of the sensor, and recording of the opening and closing state of the door and/or the installation position of the door sensor inside or outside in terms of ease of installation, but fails to disclose any measures to address work in setting relating to safety control at the time of installation as described above.

An object of the present invention is, therefore, to solve the above problem of the conventional technology and provide an object detection sensor and an automatic door system with reduced work in setting relating to safety control at the time of installation.

The inventors of the present invention conducted intensive studies and found that the above object can be achieved by the following invention.

The present invention provides an object detection sensor configured to detect that a target object acts on to-be-detected rays between a plurality of elements or to detect to-be-detected rays from a target object to output a predetermined detection signal, the object detection sensor configured to output the predetermined detection signal toward an external object detection device existing outside the object detection sensor to detect the target object, the object detection sensor including:
a sensing unit configured to detect that the target object acts on to-be-detected rays between a plurality of elements or to detect to-be-detected rays from the target object to output a sensing signal,
a control unit configured to command output of the predetermined detection signal in response to input of the sensing signal,
a sensor output unit configured to output the predetermined detection signal in response to the command,
a test signal reception unit configured to receive a test signal from the external object detection device, and
a test signal response unit configured to output a test response signal to the external object detection device in response to reception of the test signal,
the object detection sensor further including:
   a learning mode transition input unit configured to start a learning mode,
   a test signal determination unit configured to determine a state of the test signal received by the test signal reception unit in the learning mode,
   a test signal estimation unit configured to estimate a characteristic of the test signal from the determined state of the test signal in the learning mode, and
   a test signal verification unit configured to verify whether the estimated characteristic of the test signal is included in the test signal received by the test signal reception unit in the learning mode.

The expression that a target object acts on to-be-detected rays between a plurality of elements includes, for example, that the target object acts on, e.g., reflects or interrupts, the to-be-detected rays (such as infrared rays) between the plurality of elements.

According to the above-described configuration, the object detection sensor according to the present invention includes: the learning mode transition input unit configured to start the learning mode, the test signal determination unit configured to determine a state of the test signal in the learning mode, the test signal estimation unit configured to estimate a characteristic of the test signal in the learning mode, and the test signal verification unit configured to verify whether the estimated characteristic is included in the received test signal in the learning mode. For example, the learning mode is a mode for automatically performing setting relating to safety control at the time of installation, and the above configuration makes it possible to automatically perform, using the automatic door sensor, an operation for matching characteristics of test signals between the transmitting and receiving sides, which has been performed manually at the time of installation previously. Therefore, work in setting relating to safety control at the time of installation can be reduced.

The sensor output unit may additionally serve as the test signal response unit, and the predetermined detection signal and the test response signal may be outputted through a same signal line. This configuration can reduce cumbersome wiring between the object detection sensor and the external object detection device.

Instead of the learning mode, a manual setting mode in which a characteristic of the test signal is manually set may be executed. This permits individual and specific manipulations. It should be noted that the manual setting mode may be considered as a normal mode with respect to the learning mode and may permit not only manual setting using a DIP switch, a button switch, etc., but also manual input of a command to automatically execute the manual setting mode, leaving the determination and/or the setting content to the control unit, etc.

The learning mode transition input unit may be at least one of a switch installed in the object detection sensor, a wireless reception unit configured to receive a radio signal from a predetermined wireless device, a network reception unit configured to receive a transmission signal from a predetermined network device, and the sensing unit configured to detect a predetermined motion of a human body. This makes it possible to start the learning mode using the object detection sensor, or using a wireless device or a network device in a constructor's hand, etc. The sensing unit configured to detect a predetermined motion of a human body may include, for example, elements configured to detect a motion, e.g., a hand gesture, of a constructor such as an imaging element and an image processing unit (and a signal processing unit therefor). Alternatively, a motion detection unit including such elements (and a processing unit therefor) may be used instead of the sensing unit.

When the test signal reception unit fails to receive the test signal, or when the test signal verification unit verifies or determines that the estimated characteristic of the test signal is not included in the test signal received by the test signal reception unit, an abnormal state may be determined, and an output indicating abnormality is given. This allows a constructor and the like to recognize the abnormal state. The abnormal state may include not only an abnormal state in the system or the like, such as disconnection between the object detection sensor and the external object detection device in a normal operating condition, but also an abnormal state determined as a consequence of an operational condition where, for example, based on the decision of a constructor or the like, the test signals are not included on purpose, or wiring for test signals is not installed on purpose between the object detection sensor and the external object detection device. In this case, it is also possible to know that the system is currently in such an intentional operational condition.

The test signal may be a pulse wave signal. Thus, the test signal can be easily realized.

The characteristic of the test signal estimated by the test signal estimation unit may be stored in a memory in the object detection sensor. Storing the characteristic of the test signal in the memory facilitates verification by the test signal verification unit as to whether the estimated characteristic of the test signal is included in the test signal received by the test signal reception unit.

An automatic door system according to the present invention includes: the object detection sensor recited in any one of the aspects, an automatic door control device which is the external object detection device configured to detect a human body which is the target object in response to input of the predetermined detection signal from the object detection sensor, and an automatic door including a door leaf configured to open and close automatically and a door engine configured to cause the door leaf to open and close, wherein the automatic door control device controls the door engine on the basis of a result of detection of the human body.

According to this configuration, the automatic door system according to the present invention makes it possible to realize an automatic door which provides the effects of the object detection sensor as described above.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views.
Fig. 1 shows a schematic external view of an automatic door system including an object detection sensor according to one embodiment of the present invention;
Fig. 2 shows a function block diagram of an automatic door control device which is an object detection device;
Fig. 3 shows connections between the automatic door control device and the automatic door sensor which is an object detection sensor;
Fig. 4A shows a wave chart of a test signal of the present embodiment;
Fig. 4B shows a wave chart of another test signal of the present embodiment;
Fig. 5 shows a function block diagram of the automatic door sensor; and
Fig. 6 shows an operation flowchart for automatic setting of the test signal of the automatic door sensor.

### DESCRIPTION OF THE EMBODIMENTS

Hereinafter, one embodiment of the present invention will be described with reference to the drawings. It should be noted that same reference signs denote same or corresponding parts in the drawings, and description therefor is omitted unless changes or the like need to be specifically described.

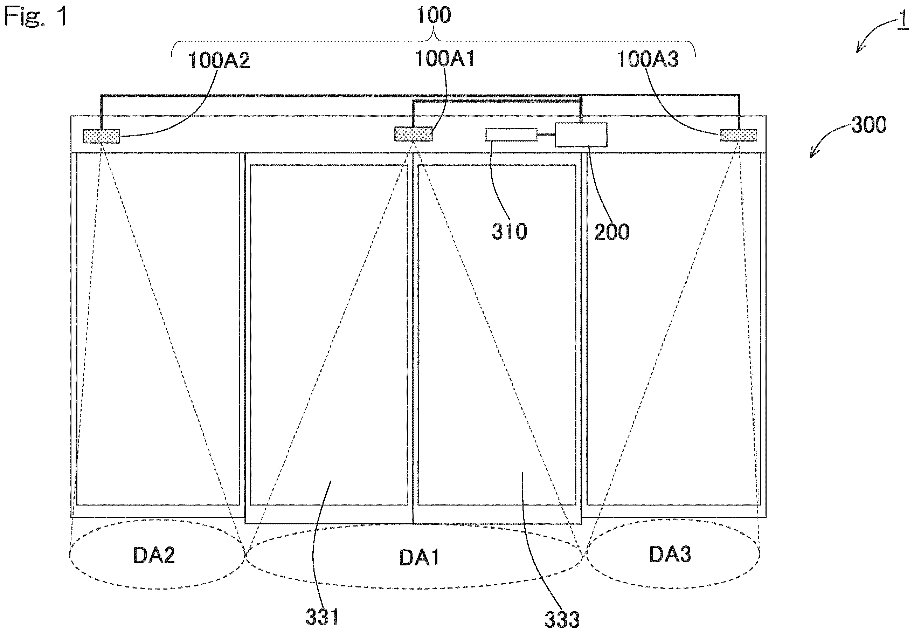

Fig. 1 shows a schematic external view of an automatic door system including an object detection sensor according to one embodiment of the present invention. The object detection sensor detects to-be-detected rays such as infrared rays from a target object which is a physical body such as a heat generating body, e.g., a human body or an animal, to output a predetermined detection signal toward an external object detection device which performs detection of the human body. The predetermined detection signal has, for example, a predetermined characteristic that the signal is normally at a Low level (hereinafter, sometimes simply indicated as "Low") and rises to a High level (hereinafter, sometimes simply indicated as "High") while a target object is detected. The following description of the present embodiment makes reference to an exemplary case where the object detection device existing outside the object detection sensor is an automatic door control device which detects a human body as the target object. The object detection device of the present embodiment, however, is not limited to that of the exemplary case. For example, the object detection device may be a people counting device, or an intrusion detection device, or the like.

Referring to Fig. 1, the automatic door system 1 according to the present embodiment includes: the object detection sensor 100 as described above, an automatic door control device 200 configured to detect a human body (not illustrated), which is the target object, in response to input of the detection signal from the object detection sensor 100, and an automatic door 300 including door leaves 331, 333, configured to open and close automatically, and a door engine 310 configured to cause the door leaves to open and close. For example, the object detection sensor 100 is mounted on an external part of a transom, the door engine 310 is incorporated in the transom, and the automatic door control device 200 is located outside or inside the transom. The object detection sensor 100 is connected to the automatic door control device 200, and the automatic door control device 200 is connected to the door engine 310. These features are provided to both sides (i.e., on the closer side and the farther side in the figure of the paper) of the automatic door 300 with respect to the door leaves 331, 333.

The automatic door control device 200 controls the electric door engine 310 on the basis of the result of the detection of the human body. Specifically, the object detection sensor 100 of the present embodiment includes: safety sensors 100A2, 100A3 which output a human body detection signal (detection signal) to control a door-closing stop request, or a door opening request, or a door-opening retaining request so as to avoid, so called a human body getting caught in the door leaves 331, 333 closing from the open position, and an activation safety sensor 100A1 serving as a same safety sensor and an activation sensor to detect a human body to output a human body detection signal (detection signal) for controlling a door opening request in order to open the door leaves 331, 333. (Hereinafter, sometimes collectively referred to as "automatic door sensor 100"). The activation safety sensor 100A1 and the safety sensors 100A2, 100A3 are, for example, located at the center, the left part, and the right part of the transom in Fig. 1, respectively, and include infrared ray detection elements (not illustrated) to detect a target object (human body) within the detection areas DA1, DA2, DA3 in Fig. 1, respectively, which are the respective fields of view of the infrared ray detection elements, to output the detection signals. In response to input of a detection signal from the automatic door sensor 100, the automatic door control device 200 controls opening of the door leaves 331, 333 and closing of the door leaves 331, 333 on the basis of the result of detection of the human body. The detection elements of the activation safety sensor 100A1 and the safety sensors 100A2, 100A3 may be PIR sensors [passive infrared ray sensors] as in the present embodiment or AIR sensors [active infrared ray sensors] which detect when a target object acts on, e.g., reflects or interrupts, to-be-detected rays such as infrared rays between a plurality of elements to output a predetermined detection signal. Instead of such infrared ray detection elements, alternatively, the detection elements may be sensors based on the detection principles using heat rays, ultrasonic waves, MWs (micro waves), lasers, images; or other detectors such as light detection elements, radio wave detection elements, and imaging elements.

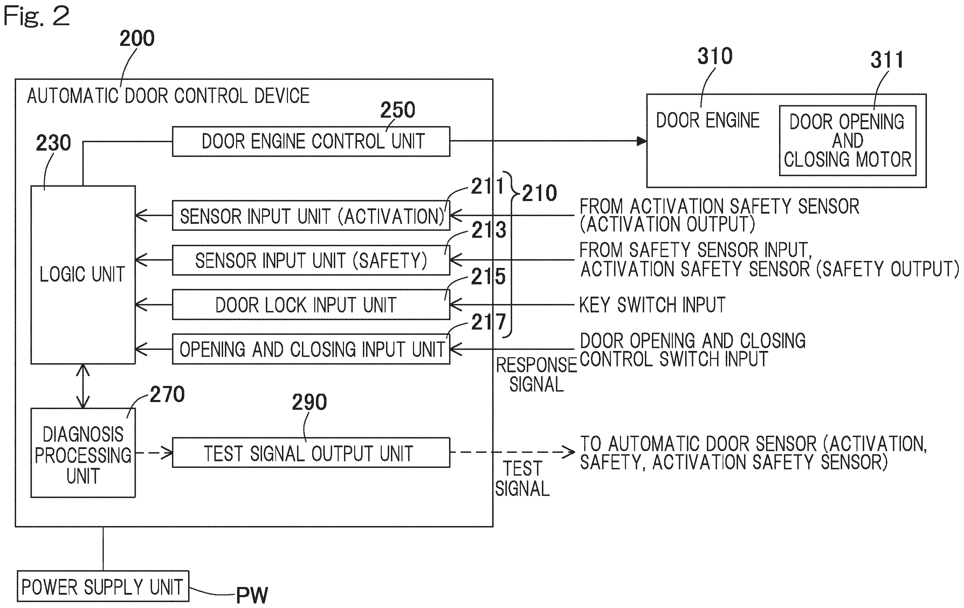

Fig. 2 shows a function block diagram of the automatic door control device 200 which is an object detection device according to the present embodiment. The individual function blocks are constituted by suitable software or hardware. As shown in Fig. 2, for example, the automatic door control device 200 at least includes: an input unit 210, a logic unit 230, a door engine control unit 250, a diagnosis processing unit 270 serving as test equipment of the ISO13849-1 standard, and a test signal output unit 290. A power supply unit PW is connected to the automatic door control device 200 to supply power to the automatic door control device 200, the door engine 310, etc.

The input unit 210 in the present embodiment accepts (receives) input of detection signals or test response signals (also simply referred to "response signals"; described later) from the automatic door sensor 100 and outputs signals indicating receptions of the respective signals to the logic unit 230. The input unit 210 includes: a sensor input unit (for activation) 211 which receives a detection signal upon output of an activation signal from the activation sensor, e.g., from the activation safety sensor 100A1 in the present embodiment; a sensor input unit (for safety) 213 which receives a detection signal upon output of a detection signal from the safety sensors 100A2, 100A3 and a safety signal from the activation safety sensor 100A1; a door lock input unit 215 which receives input from key switches (not illustrated) attached to the door leaves 331, 333; and an opening and closing input unit 217 which receives input from a door opening and closing control switch (not illustrated). The logic unit 230 at least includes a processor and controls the door engine 310 through the door engine control unit 250 to open and close the door leaves 331, 333 in response to input of the signals from the input unit 210 indicating receptions of the detection signals. The door engine 310 includes a door opening and closing motor 311 as a power source for opening and closing the door leaves 331, 333. In response to input of the signals from the input unit 210 indicating receptions of the response signals, the logic unit 230 makes notification of the diagnosis processing unit 270 of receptions of the response signals.

In respect of a safety control system, monitoring (i.e., transmission of test signals from test equipment and returning of test response signals from input equipment to the test equipment) is performed between the control device as described above, the input-side sensors, the output-side door engine, etc., and the test equipment which may be incorporated in the control device. As for the safety control system, for example, the safety standard ISO13849-1 is known. In the present embodiment, the diagnosis processing unit 270 corresponds to the test equipment (TE: Test Equipment) of the safety standard ISO13849-1, the logic unit 230 corresponds to the logic unit (L: Logic) of the safety standard, and the automatic door sensor 100 corresponds to the input equipment (I: Input) such as a sensor of the safety standard. The test signal output unit 290 outputs test signals to the automatic door sensor 100, and the diagnosis processing unit 270 commands the test signal output unit 290 to output test signals in response to the notification from the logic unit 230 to verify the safety state of the individual elements of the input equipment at least including the automatic door sensor 100. The monitoring by the diagnosis processing unit 270 is, for example, executed before an actual opening and closing operation of the door leaves 331, 333. The monitoring of the automatic door sensor 100 is performed through the test signal output unit 290, and the monitoring of the logic unit 230 is performed in the automatic door control device 200. In the present embodiment, the door engine 310 is not a subject of the monitoring.

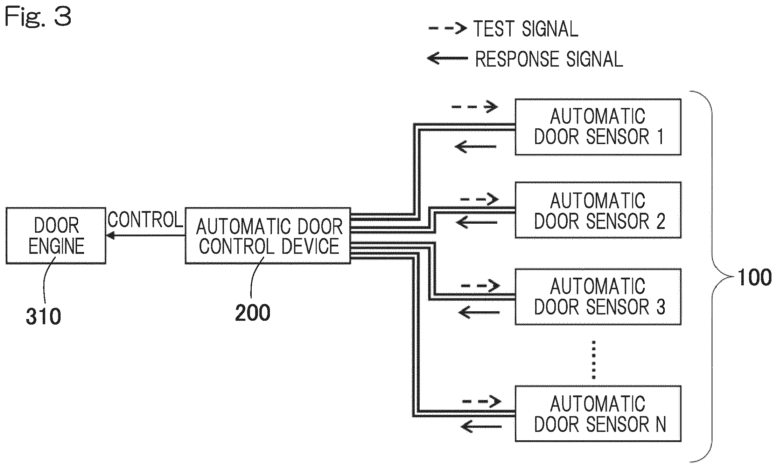

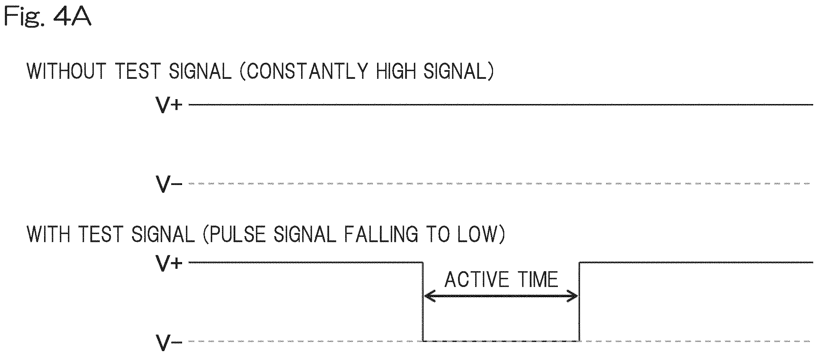

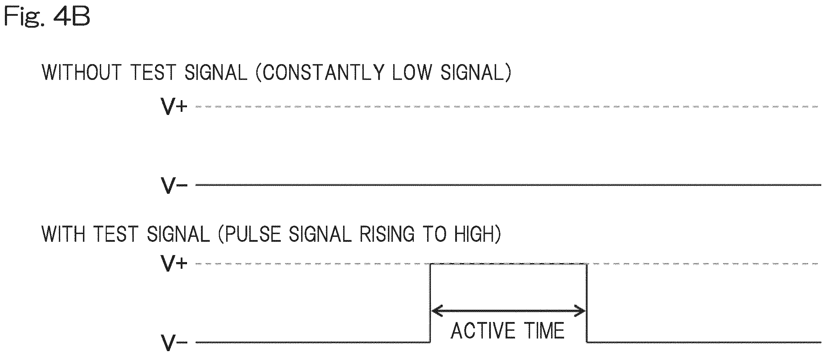

As shown in Fig. 3, the automatic door control device 200 is connected to each of N (N is a natural number) automatic door sensors 100 (automatic door sensor 1 to automatic door sensor N) through a pair of signal lines including a signal line for test signals and a signal line for response signals. The automatic door control device 200 includes at least one set of input and output ports for this purpose. In the present embodiment, the automatic door control device 200 includes N sets of input and output ports. In the present embodiment, the test signal is, as shown in Fig. 4A and Fig. 4B, either a signal that is at a High level (V+ [V]) normally (in the steady state or non-active state) and exhibits a falling edge to a Low level (V- [V]) in the active state (active Low [active Lo]; Fig. 4A), or a signal that is at a Low level (V- [V]) normally (in the steady state or non-active state) and exhibits a rising edge to a High level (V+ [V]) in the active state (active High [active Hi]; Fig. 4B). For example, V- = 0 [V], and V+ = 5.0, 3.3, 2.5, 1.8, 1.3, 1.0 or 0.8 [V]. The test signal in the present embodiment is a pulse wave signal which returns to the non-active state after a predetermined time (active time) from the falling edge or the rising edge. The active time is generally in the order of milliseconds to hundreds of milliseconds. The active time is, for example, 50 to 400 msec, and typically 200 msec. The active time is stored in a memory or the like at the time of delivery. The response signal is a pulse wave signal similar to the test signal. The test signal and the response signal have same steady state and active time in the present embodiment.

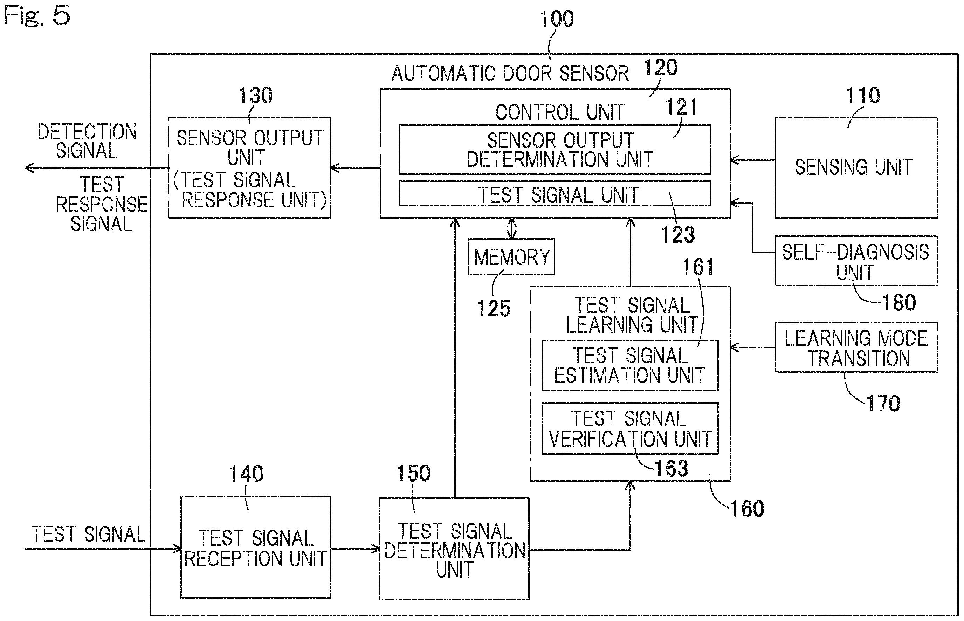

Fig. 5 shows a function block diagram of the automatic door sensor 100 according to the present embodiment. The individual function blocks are constituted by suitable software or hardware. The automatic door sensor 100 is an object detection sensor, which detects to-be-detected rays (infrared rays in the present embodiment) from a human body which is a target object, to output a predetermined detection signal as described above to the automatic door control device 200 which is an object detection device. Since the activation safety sensor 100A1 and the safety sensors 100A2, 100A3, which are encompassed within the automatic door sensor 100, do not substantially differ in their configurations in the illustrated scope although they have different roles, the configuration of one automatic door sensor 100 in general is described. The automatic door sensor 100 at least includes: a sensing unit 110, a control unit 120, a sensor output unit 130, a test signal reception unit 140, a test signal determination unit 150, a test signal learning unit 160, a learning mode transition input unit 170, and a self-diagnosis unit 180.

The sensing unit 110 in the present embodiment includes an infrared ray detection element to detect infrared rays (as a PIR sensor) from a human body which is a target object and output a sensing signal. The sensing unit 110 may include a plurality of elements including a to-be-detected ray transmission element and a to-be-detected ray reception element (as an AIR sensor) to detect that the target object acts on, e.g., reflects or interrupts, to-be-detected rays such as infrared rays between the plurality of elements, to output a sensing signal. The sensing unit 110 may include, for example, a plurality of elements including a to-be-detected ray (electromagnetic wave) transmission element and a to-be-detected ray (electromagnetic wave) reception element (such as a MW sensor) to detect that the target object acts on, e.g., reflects or interrupts, to-be-detected rays (electromagnetic waves) such as microwaves or millimeter-waves between the plurality of elements, to output a sensing signal. Further, the sensing unit 110 may include, for example, elements such as an imaging element and an image processing unit (and a signal processing unit therefor) to detect to-be-detected rays such as to-be-detected non-visible light rays including infrared rays from a human body as a target object and/or to-be-detected visible light rays (image sensing), to output a sensing signal. The control unit 120 at least includes a processor and includes a sensor output determination unit 121 which determines whether or not the sensing signal is outputted. The sensor output determination unit 121 makes command of output of the predetermined detection signal in response to input of the sensing signal. The sensor output unit 130 outputs the predetermined detection signal in response to input of the command. As described above, in order for the input unit 210 of the automatic door control device 200 to receive both of the detection signal and the test response signal from each automatic door sensor 100, the sensor output unit 130 of the present embodiment additionally serves as a test signal response unit which outputs a test response signal to the object detection device (automatic door control device 200) upon input of a test signal, and the predetermined detection signal and the test response signal are outputted through a same signal line (signal line for response signal in Fig. 3). Therefore, the predetermined detection signal and the test response signal are outputted as a result of a logical disjunction (OR) calculation in the sensor output unit 130 through a same signal line.

The test signal reception unit 140 is an input terminal, an input buffer, or the like which receives the test signal from the automatic door control device 200 which is an external object detection device. In a learning mode as described later, the test signal determination unit 150 determines the state of the test signal received by the test signal reception unit 140, for example, determines the non-active state (steady state) of the test signal, and determines whether or not the test signal reception unit 140 has received the test signal. In a normal mode, that is, when not in the learning mode, the test signal determination unit 150 determines whether or not the test signal reception unit 140 has received the test signal, and outputs the determination result to the control unit 120. In the present embodiment, the test signal determination unit 150 determines the steady state, i.e., whether the signal is Low or High in the steady state, and determines (detects) the falling edge or the rising edge in the learning mode, whereas the test signal determination unit 150 only determines (detects) the falling edge or the rising edge in the normal mode.

The learning mode transition input unit 170 is a switch which receives input of a learning mode start to start the learning mode and, in the present embodiment, for example, protrudes from the automatic door sensor 100. The learning mode transition input unit 170 is not limited to such a switch and may be, for example, a wireless reception unit which receives a radio signal from a predetermined wireless device such as a remote controller in a constructor's hand to accept input of the learning mode start, or a network reception unit which receives a transmission signal from a predetermined network device such as a smartphone to accept input of the learning mode start. In addition, the learning mode transition input unit 170 may be, for example, the sensing unit 110 which detects a predetermined motion of a human body, including elements (and a signal processing unit therefor) for detecting a motion, e.g., a hand gesture, of a constructor such as an imaging element and an image processing unit. Alternatively, a motion detection unit including such elements (and the signal processing unit therefor) may be used instead of the sensing unit 110. The learning mode is a mode for automatically performing setting relating to safety control as described above at the time of installation and, in the present embodiment, a mode for automatically performing, using the automatic door sensor 100, an operation for matching characteristics of test signals (hereinafter, referred to as a characteristic matching operation) between the transmitting and receiving sides (between the automatic door control device 200 and the automatic door sensors 100), which has been performed manually at the time of installation previously. The characteristic matching operation may be performed on the characteristic of response signals or the like. The characteristic matching operation between the transmitting and receiving sides is a setting relating to safety control at the time of installation and has been one of the factors that make the installation cumbersome. In the present embodiment, however, the automatic characteristic matching operation can solve the problem and reduce work in setting relating to safety control at the time of installation.

The test signal learning unit 160 is a function unit which performs learning of test signals and includes a test signal estimation unit 161 and a test signal verification unit 163. The test signal estimation unit 161 estimates a characteristic of the test signal from the determined state of the test signal in the learning mode. In the present embodiment, the characteristic is estimated as to whether the signal is active High or active Low on the basis of the determination result of whether the signal is Low or High in the steady state (non-active time) by the test signal determination unit 150 in the learning mode. The estimated characteristic is stored in a memory 125 connected to the control unit 120. The test signal verification unit 163 verifies whether or not the estimated characteristic of the test signal is included in the test signal received in the test signal reception unit 140 in the learning mode. In the present embodiment, the unit detects a rising edge and a falling edge of a test signal, and verifies reception of and an active time of the test signal at the same time. In the verification of active time, the test signal determination unit 150 detects an actual active time (estimated value) and compares the estimated value with an active time stored in the memory 125.

The control unit 120 also includes a test signal unit 123. The test signal unit 123 starts the learning mode in response to input from the learning mode transition input unit 170, controls the automatic characteristic matching operation on the basis of the leaning of the test signals. And in the normal mode (not in the learning mode), the test signal unit 123 commands the test signal response unit (sensor output unit) 130 to output a response signal to the object detection device (automatic door control device 200) on the basis of the determination of whether or not a test signal is received by the test signal determination unit 150. The test signal unit 123 may execute, instead of the learning mode, a manual setting mode in which the characteristic of the test signal is manually set in order to permit individual and specific manipulations, without performing the automatic characteristic matching operation in the present embodiment. Here, when the test signal reception unit 140 fails to receive a test signal, i.e., when the test signal determination unit 150 does not determine that a test signal is received, or when the test signal verification unit 163 verifies or determines that the estimated characteristic of the test signal is not included in the test signal received by the test signal reception unit 140, the test signal unit 123 determines an abnormal state and gives an output indicating abnormality to an external notification device or the like, so that the external notification device can notify the abnormality.

The self-diagnosis unit 180 performs self-check of the individual units (such as the infrared ray detection element, oscillator, power source circuit, and processor) of the automatic door sensor 100 in a predetermined cycle, stores the result of the self-check (typically, presence or absence of abnormality) in an internal register or the like (not illustrated), and updates the result on each occasion. As for the conventional automatic door system, a constructor actually stands in front of the automatic door to be directly detected by the automatic door sensor to cause an actual opening/closing operation of the automatic door (actually cause a door opening operation and/or a door closing operation of the door leaves 331, 333) in order to check the operation, after setting of the test signal at the time of installation. In contrast, the automatic door control device 200 transmits, upon reception of a detection signal, a test signal to the automatic door sensor 100 prior to an actual opening/closing operation of the automatic door (door leaves) to start the function as the safety control system. In this sequence prior to an actual opening/closing operation of the door leaves (also referred to as "sequence prior to actual door opening/closing"), the automatic door sensor 100 refers to the internal register or the like upon reception of the test signal, and if no abnormality is found in the results of the self-diagnosis in the past, transmits a response signal in response to the test signal to the automatic door control device 200. If abnormality is found in the results of the self-diagnosis, the automatic door sensor 100 does not transmit a response signal in response to the test signal to the automatic door control device 200. It should be noted that if no response signal is received within a predetermined period of time, the automatic door control device 200 times out for fail-safe control and, if a response signal is received within a predetermined period of time, the automatic door control device 200 ends the function as the safety control system and performs an actual opening/closing operation of the automatic doors. The above-described transmission and reception operations of the conventional automatic door system described in this paragraph do not contradict the automatic characteristic matching operation in the present embodiment and thus also applies to the present embodiment.

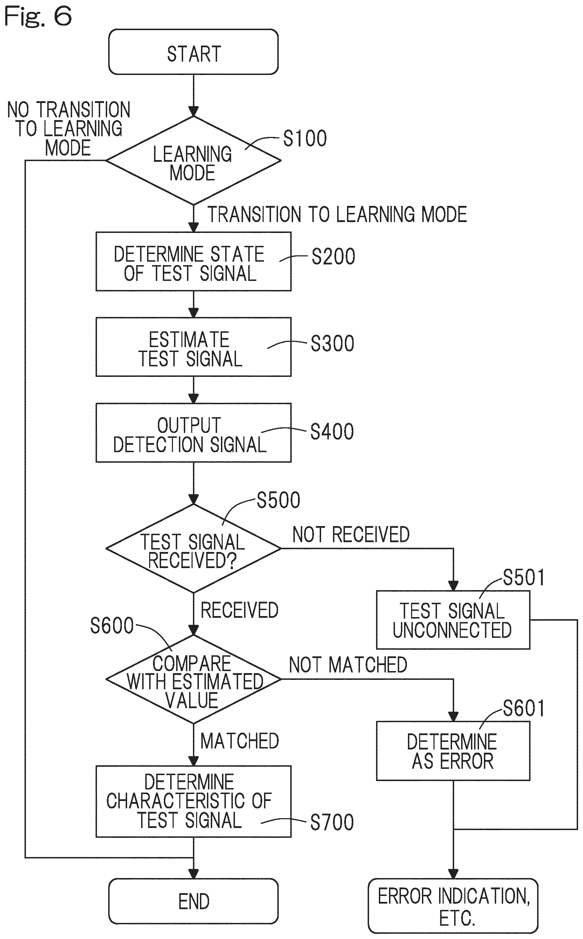

Fig. 6 shows an operation flowchart for automatic setting of the test signal (automatic characteristic matching operation) at the time of installation of the automatic door sensor 100 according to the present embodiment. When power is supplied to the automatic door system 1 ("START" in the figure), the process moves to step S100. It should be noted that the setting of the characteristic of the detection signal (whether the signal is at a Low level or a High level in the steady state and whether the signal is active High or active Low) is already completed before the transition. In step S100, determination is made as to whether the learning mode transition input unit 170 has received input of a learning mode start to cause transition to the learning mode. If transition to the learning mode occurs, the process moves to step S200, and if transition to the learning mode does not occur, the system is currently in the normal mode, i.e., not in the learning mode, so that the process moves to "END" in the figure to end the automatic characteristic matching operation. This flow may be restarted later at a predetermined timing. In step S100, a waiting operation in the order of seconds may be performed to wait for input.

In step S200 (hereafter, the mode of the system is the learning mode), the state of the test signal is determined. That is, the test signal determination unit 150 determines whether the test signal received by the test signal reception unit 140 is Low or High in the non-active state (steady state). In step S300, estimation of the test signal is performed. That is, the test signal estimation unit 161 estimates the characteristic of the test signal (estimates the characteristic as to whether the signal is active High or active Low) from the determination result of whether the signal is Low or High in the steady state (non-active time), and stores the estimation result in the memory 125. In step S400, the automatic door sensor 100 per se outputs a detection signal; that is, following (in conjunction with) the estimation, the automatic door sensor 100 outputs a detection signal to the automatic door control device 200 as an exception operation, without a constructor actually being directly detected by the automatic door sensor unlike the conventional case as described above, to start the sequence prior to actual door opening/closing to cause an actual opening/closing operation of the door leaves 331, 333 of the automatic door.

In step S500, in the learning mode, the test signal determination unit 150 determines (detects) a falling edge or a rising edge of a test signal to determine whether or not a test signal has been received. If a test signal has been received, the process moves to step S600. If, for example, a falling edge or a rising edge of a test signal is not detected within a given time, the test signal determination unit 150 determines that a test signal has not been received, and the process moves to step S501. Step S500 may be retried before moving to step S501. In step S501, the automatic door sensor 100 determines that a test signal is unconnected or a test signal line has abnormality, or that the system does not have the function meeting the ISO 13849-1 standard, and disables the function of responding to the test signal. Then, the process moves to "ERROR INDICATION, ETC." in the figure to indicate an abnormal state that the test signal responding function is disabled to notify the presence of abnormality on the automatic door control device 200 and/or an external notification device such as a predetermined wireless device such as a remote controller and a predetermined network device such as a smartphone.

In step S600, the test signal verification unit 163 detects a rising edge and a falling edge of a test signal and, at the same time, compares an actual active time (estimated value) with an active time stored in the memory 125 to verify the test signal. If the estimated value matches the active time stored in the memory 125, the process moves to step S700. If the estimated value does not match the active time stored in the memory 125, the process moves to step S601. The matching may be determined not only when the values completely match, but also when within a predetermined small margin of error. Step S600 may be retried before moving to step S601. In step S601, the automatic door sensor 100 determines that the test signal is an error. Then, the process moves to "ERROR INDICATION, ETC." in the figure to indicate an abnormal state that that the test signal is an error to notify the presence of abnormality on the automatic door control device 200 and/or an external notification device such as a predetermined wireless device such as a remote controller and a predetermined network device such as a smartphone.

In step S700, since the characteristic of the test signal is automatically determined according to the above-described flow, the sequence prior to actual door opening/closing is ended, then the system is changed from the learning mode to the normal mode, and the process moves to "END" in the figure to end the automatic characteristic matching operation. After the completion of the process, the system carries out transmission and reception operations as with the conventional case as described above and/or self-diagnosis of the automatic door sensor 100, and performs an actual opening/closing operation of the door leaves 331, 333 of the automatic door. For example, as with the conventional case, the system transmits a response signal to the automatic door control device 200 in response to a transmission test signal in dependence on the results of self-diagnosis in the past.

Although the present invention has been described in terms of the preferred embodiments thereof with reference to the drawings, various additions, modifications, or deletions may be made without departing from the scope of the claims.

### [Reference Numerals]

- 1: automatic door system
- 100: object detection sensor
- 100A1: activation safety sensor
- 100A2: safety sensor
- 100A3: safety sensor
- 110: sensing unit
- 120: control unit
- 125: memory
- 130: sensor output unit, test signal response unit
- 140: test signal reception unit
- 150: test signal determination unit
- 161: test signal estimation unit
- 163: test signal verification unit
- 170: learning mode transition input unit
- 200: object detection device (automatic door control device)
- 300: automatic door
- 310: door engine
- 331: door leaf
- 333: door leaf

## Claims

1. An object detection sensor configured to detect that a target object acts on to-be-detected rays between a plurality of elements or to detect to-be-detected rays from a target object to output a predetermined detection signal, the object detection sensor configured to output the predetermined detection signal toward an external object detection device existing outside the object detection sensor to detect the target object, the object detection sensor comprising:
a sensing unit configured to detect that the target object acts on to-be-detected rays between a plurality of elements or to detect to-be-detected rays from the target object to output a sensing signal,
a control unit configured to command output of the predetermined detection signal in response to input of the sensing signal,
a sensor output unit configured to output the predetermined detection signal in response to the command,
a test signal reception unit configured to receive a test signal from the external object detection device, and
a test signal response unit configured to output a test response signal to the external object detection device in response to reception of the test signal,
the object detection sensor further comprising:
a learning mode transition input unit configured to start a learning mode,
a test signal determination unit configured to determine a state of the test signal received by the test signal reception unit in the learning mode,
a test signal estimation unit configured to estimate a characteristic of the test signal from the determined state of the test signal in the learning mode, and
a test signal verification unit configured to verify whether the estimated characteristic of the test signal is included in the test signal received by the test signal reception unit in the learning mode.

2. The object detection sensor as claimed in claim 1, wherein the sensor output unit additionally serves as the test signal response unit, and the predetermined detection signal and the test response signal are outputted through a same signal line.

3. The object detection sensor as claimed in claim 1 or 2, wherein instead of the learning mode, a manual setting mode in which a characteristic of the test signal is manually set is executed.

4. The object detection sensor as claimed in any one of claims 1 to 3, wherein the learning mode transition input unit is at least one of a switch installed in the object detection sensor, a wireless reception unit configured to receive a radio signal from a predetermined wireless device, a network reception unit configured to receive a transmission signal from a predetermined network device, and the sensing unit configured to detect a predetermined motion of a human body.

5. The object detection sensor as claimed in any one of claims 1 to 4, wherein when the test signal reception unit fails to receive the test signal, or when the test signal verification unit verifies or determines that the estimated characteristic of the test signal is not included in the test signal received by the test signal reception unit, an abnormal state is determined, and an output indicating abnormality is given.

6. The object detection sensor as claimed in any one of claims 1 to 5, wherein the test signal is a pulse wave signal.

7. The object detection sensor as claimed in any one of claims 1 to 6, wherein the characteristic of the test signal estimated by the test signal estimation unit is stored in a memory in the object detection sensor.

8. An automatic door system comprising:
the object detection sensor as claimed in any one of claims 1 to 7,
an automatic door control device which is the external object detection device configured to detect a human body which is the target object in response to input of the predetermined detection signal from the object detection sensor, and
an automatic door including a door leaf configured to open and close automatically and a door engine configured to cause the door leaf to open and close,
wherein the automatic door control device controls the door engine on the basis of a result of detection of the human body.

## Patentansprüche

1. Objektdetektionssensor, dazu eingerichtet, zu detektieren, dass ein Ziel- objekt auf zu detektierende Strahlen zwischen mehreren Elementen wirkt, oder zu detektierende Strahlen von einem Zielobjekt zu detektieren, um ein vorgege- benes Detektionssignal auszugeben, wobei der Objekterfassungssensor dazu eingerichtet ist, das vorgegebene Detektionssignal an eine außerhalb des Objektdetektionssensors vorhandene externe Objektdetektionsvorrichtung auszu- geben, um das Zielobjekt zu detektieren, wobei der Objektdetektionssensor um- fasst:
eine Sensoreinheit, die dazu eingerichtet ist, zu detektieren, dass das Zielobjekt auf zu detektierende Strahlen zwischen mehreren Elementen wirkt, oder zu detektierende Strahlen vom Zielobjekt zu detektieren, um ein Sensor- signal auszugeben,
eine Steuereinheit, die dazu eingerichtet ist, die Ausgabe des vorgege- benen Detektionssignals als Reaktion auf die Eingabe des Sensorsignals hin anzuweisen,
eine Sensorausgangseinheit, die dazu eingerichtet ist, das vorgegebene Detektionssignal auf die Anweisung hin auszugeben,
eine Testsignalempfangseinheit, die dazu eingerichtet ist, ein Testsignal von der externen Objektdetektionsvorrichtung zu empfangen, und
eine Testsignalantworteinheit, die dazu eingerichtet ist, auf den Empfang des Testsignals hin ein Testantwortsignal an die externe Objektdetektionsvorrichtung auszugeben,
wobei der Objektdetektionssensor ferner umfasst:
eine Eingabeeinheit für den Übergang in einen Lernmodus, die dazu ein- gerichtet ist, einen Lernmodus zu starten,
eine Testsignalbestimmungseinheit, die dazu eingerichtet ist, im Lern- modus einen Zustand des von der Testsignalempfangseinheit empfangenen Testsignals zu bestimmen,
eine Testsignalschätzeinheit, die dazu eingerichtet ist, eine Eigenschaft des Testsignals aus dem bestimmten Zustand des Testsignals im Lernmodus zu schätzen, und
eine Testsignalverifizierungseinheit, die dazu eingerichtet ist, zu verifizie- ren, ob die geschätzte Eigenschaft des Testsignals in dem von der Testsignalempfangseinheit im Lernmodus empfangenen Testsignal vorhanden ist.

2. Objektdetektionssensor nach Anspruch 1, wobei die Sensorausgangs- einheit zusätzlich als Testsignalantworteinheit dient und das vorgegebene Detektionssignal und das Testantwortsignal über eine gleiche Signalleitung aus- gegeben werden.

3. Objektdetektionssensor nach Anspruch 1 oder 2, wobei anstelle des Lernmodus ein manueller Einstellmodus, in dem eine Eigenschaft des Testsig- nals manuell eingestellt wird, ausgeführt wird.

4. Objektdetektionssensor nach einem der Ansprüche 1 bis 3, wobei die Eingabeeinheit für den Übergang in einen Lernmodus mindestens eines der folgenden ist: ein im Objektdetektionssensor installierter Schalter, eine drahtlo- se Empfangseinheit, die dazu eingerichtet ist, ein Funksignal von einer vorge- gebenen drahtlosen Vorrichtung zu empfangen, eine Netzwerkempfangseinheit, die dazu eingerichtet ist, ein Übertragungssignal von einer vorgegebenen Netzwerkvorrichtung zu empfangen, und die Sensoreinheit, die dazu eingerich- tet ist, eine vorgegebene Bewegung eines menschlichen Körpers zu detektie- ren.

5. Objektdetektionssensor nach einem der Ansprüche 1 bis 4, wobei, wenn die Testsignalempfangseinheit das Testsignal nicht empfangen kann oder wenn die Testsignalverifizierungseinheit verifiziert oder feststellt, dass die geschätzte Eigenschaft des Testsignals nicht in dem von der Testsignalempfangseinheit empfangenen Testsignal enthalten ist, ein anomaler Zustand festgestellt wird und eine Ausgabe, die die Anomalität angibt, bereitgestellt wird.

6. Objektdetektionssensor nach einem der Ansprüche 1 bis 5, wobei das Testsignal ein Pulswellensignal ist.

7. Objektdetektionssensor nach einem der Ansprüche 1 bis 6, wobei die von der Testsignalschätzeinheit geschätzte Eigenschaft des Testsignals in ei- nem Speicher im Objektdetektionssensor gespeichert wird.

8. Automatisches Türsystem, umfassend:
den Objektdetektionssensor nach einem der Ansprüche 1 bis 7,
eine automatische Türsteuerungsvorrichtung, die die externe Objektde- tektionsvorrichtung ist, die dazu eingerichtet ist, einen menschlichen Körpers, der das Zielobjekt ist, auf die Eingabe des vorgegebenen Detektionssignals vom Objektdetektionssensor hin zu detektieren, und
eine automatische Tür mit einem Türblatt, das dazu eingerichtet ist, sich automatisch zu öffnen und zu schließen, und einen Türmotor, der dazu einge- richtet ist, das Öffnen und Schließen des Türblatts zu bewirken,
wobei die automatische Türsteuerungsvorrichtung den Türmotor auf der Grundlage eines Ergebnisses der Detektion des menschlichen Körpers steuert.

## Revendications

1. Capteur de repérage d'objet configuré pour repérer un objet cible agissant sur des rayons à repérer parmi une pluralité d'éléments, ou pour repérer des rayons à repérer provenant d'un objet cible afin d'émettre un signal de repérage prédéterminé, le capteur de repérage d'objet étant configuré pour émettre le signal de repérage prédéterminé vers un dispositif de repérage d'objet externe qui se trouve à l'extérieur du capteur de repérage d'objet afin de repérer l'objet cible, le capteur de repérage d'objet comprenant :
une unité de détection configurée pour repérer l'objet cible agissant sur les rayons à repérer parmi une pluralité d'éléments ou pour repérer des rayons à repérer provenant de l'objet cible afin d'émettre un signal de détection,
une unité de commande configurée pour donner une instruction d'émettre le signal de repérage prédéterminé en réponse à l'entrée du signal de détection,
une unité de sortie de capteur configurée pour émettre le signal de repérage prédéterminé en réponse à l'instruction,
une unité de réception de signal de test configurée pour recevoir un signal de test du dispositif de repérage d'objet externe, et
une unité de réponse de signal de test configurée pour émettre un signal de réponse de test vers le dispositif de repérage d'objet externe en réponse à la réception du signal de test,
le capteur de repérage d'objet comprenant en outre :
une unité d'entrée de transition de mode d'apprentissage configurée pour démarrer un mode d'apprentissage,
une unité de détermination de signal de test configurée pour déterminer un état du signal de test reçu par l'unité de réception de signal de test en mode d'apprentissage,
une unité d'estimation de signal de test configurée pour estimer une caractéristique du signal de test à partir de l'état déterminé du signal de test en mode d'apprentissage, et
une unité de vérification de signal de test configurée pour vérifier si la caractéristique estimée du signal de test est incluse dans le signal de test reçu par l'unité de réception de signal de test en mode d'apprentissage.

2. Capteur de repérage d'objet selon la revendication 1, dans lequel l'unité de sortie de capteur sert également d'unité de réponse de signal de test, et le signal de repérage prédéterminé et le signal de réponse de test sont émis par le biais d'une même ligne de signal.

3. Capteur de repérage d'objet selon la revendication 1 ou 2, dans lequel, au lieu du mode d'apprentissage, un mode de réglage manuel dans lequel une caractéristique du signal de test est réglée manuellement est exécuté.

4. Capteur de repérage d'objet selon l'une des revendications 1 à 3, dans lequel l'unité d'entrée de transition de mode d'apprentissage est au moins l'un parmi un commutateur installé dans le capteur de repérage d'objet, une unité de réception sans fil configurée pour recevoir un signal radio d'un dispositif sans fil prédéterminé, une unité de réception réseau configurée pour recevoir un signal de transmission d'un dispositif réseau prédéterminé, et l'unité de détection configurée pour repérer un mouvement prédéterminé d'un corps humain.

5. Capteur de repérage d'objet selon l'une des revendications 1 à 4, dans lequel lorsque l'unité de réception de signal de test n'arrive pas à recevoir le signal de test, ou lorsque l'unité de vérification de signal de test vérifie ou détermine que la caractéristique estimée du signal de test n'est pas incluse dans le signal de test reçu par l'unité de réception de signal de test, un état anormal est déterminé et une sortie indiquant l'anomalie est donnée.

6. Capteur de repérage d'objet selon l'une des revendications 1 à 5, dans lequel le signal de test est un signal d'onde d'impulsion.

7. Capteur de repérage d'objet selon l'une des revendications 1 à 6, dans lequel la caractéristique du signal de test estimée par l'unité d'estimation de signal de test est stockée dans une mémoire du capteur de repérage d'objet.

8. Système de porte automatique comprenant :
le capteur de repérage d'objet selon l'une des revendications 1 à 7,
un dispositif de commande de porte automatique qui est le dispositif de repérage d'objet externe configuré pour repérer un corps humain qui est l'objet cible en réponse à l'entrée du signal de repérage prédéterminé provenant du capteur de repérage d'objet, et
une porte automatique comprenant un battant de porte configuré pour s'ouvrir et se fermer automatiquement et un moteur de porte configuré pour provoquer l'ouverture et la fermeture du battant de porte,
dans lequel le dispositif de commande de porte automatique commande le moteur de porte sur la base d'un un résultat du repérage du corps humain.
